(19) Europäisches Patentamt / European Patent Office / Office européen des brevets

(11) **EP 3 308 489 B1**

(12) **EUROPEAN PATENT SPECIFICATION**

(45) Date of publication and mention of the grant of the patent:
**25.11.2020 Bulletin 2020/48**

(51) Int Cl.:
*H04L 5/00* (2006.01)  *H04L 27/18* (2006.01)
*H04L 27/20* (2006.01)  *H04L 27/26* (2006.01)

(21) Application number: **15766081.2**

(22) Date of filing: **07.09.2015**

(86) International application number:
**PCT/EP2015/070352**

(87) International publication number:
**WO 2017/041816 (16.03.2017 Gazette 2017/11)**

(54) **MODULATOR FOR GENERATING A MODULATED SIGNAL WITH A REDUCED TRANSMIT SPECTRUM**

MODULATOR ZUR ERZEUGUNG EINES MODULIERTEN SIGNALS MIT REDUZIERTEM ÜBERTRAGUNGSSPEKTRUM

MODULATEUR POUR GÉNÉRER UN SIGNAL MODULÉ AVEC UN SPECTRE DE TRANSMISSION RÉDUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2018 Bulletin 2018/16**

(73) Proprietor: **Huawei Technologies Co., Ltd.**
**Longgang District**
**Shenzhen, Guangdong 518129 (CN)**

(72) Inventor: **GAFFNEY, Brian**
**80992 Munich (DE)**

(74) Representative: **Körber, Martin Hans**
**Mitscherlich PartmbB**
**Patent- und Rechtsanwälte**
**Sonnenstrasse 33**
**80331 München (DE)**

(56) References cited:
**US-A- 4 416 016**    **US-A- 5 313 493**
**US-A1- 2007 230 610**

• **"3rd Generation Partnership Project; Technical Specification Group GSM/EDGE Radio Access Network; Cellular System Support for Ultra Low Complexity and Low Throughput Internet of Things; (Release 13)", 3GPP STANDARD; 3GPP TR 45.820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG1, no. V2.1.0, 21 August 2015 (2015-08-21), pages 1-524, XP050995869, [retrieved on 2015-08-21]**
• **QUALCOMM INCORPORATED: "Peak-to-Average Power Ratio and Power Spectral Density of Tone-Phase-Shift Keying", 3GPP DRAFT; GP-150116- NB-OFDMA PAPR AND PSD OF TPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG GERAN, no. Shanghai, China; 20150309 - 20150313 8 March 2015 (2015-03-08), XP050931566, Retrieved from the Internet: URL:http://www.3gpp.org/ftp/Meetings_3GPP_ SYNC/GERAN/Docs/ [retrieved on 2015-03-08]**

**Description**

**TECHNICAL FIELD**

The present invention relates to a modulator for generating a modulated signal with a reduced transmit spectrum. The present invention also relates to a battery-operated device, a demodulator and methods for modulating and/or demodulating a signal. The present invention also relates to a computer-readable storage medium storing program code, the program code comprising instructions for carrying out such a method.

**BACKGROUND**

Generating a Tone Phase Shift Keying (TPSK) signal involves encoding $\log_2(M)$ bits to the phase of a symbol and $\log_2(K)$ bits to the frequency (tone). This can be written as $(M,K)$-TPSK. The possible tone frequencies are typically assigned from K contiguous sub-carriers from a set of N (which can be contiguous or interleaved over the band). The transmitted signal can be generated by inputting the required phase on the sub-carrier of an IFFT, and zeroing all other carriers. The resulting signal can therefore be written as

$$ x(n) = \exp\left(\frac{j2m\pi}{M}\right) * \exp\left(\frac{j2nk\pi}{N}\right), $$

$n. = 0, 1, ...N$; $m \in [0, M - 1]$; $k \in [L, L + K-1]$

A cyclic prefix can be added on each symbol in order to make the signal robust to multipath and/or timing errors. As a result, the uplink signals are orthogonal.

A main design consideration for Internet of Things (IoT) systems is to allow user equipments (UE) to have a very long battery life (e.g. many years). To achieve this goal, the wireless system should be designed so that the UE can use efficient power amplifiers. Constant amplitude modulation schemes such as GMSK offer the ability to use high efficiency power amplifiers by operating at saturation. Theoretically, TPSK is also a constant amplitude signal, i.e. x(n) is guaranteed to have a magnitude of 1.

However, the phase discontinuity between consecutive symbols of the TPSK-modulated signal can lead to an infinite bandwidth signal which a realistic transmitter cannot produce. This leads to uncontrolled out of band emissions due to a lack of linearity when operating at saturation. When transmitted by a practical band limited device, the signal is no longer constant amplitude.

The document "3rd Generation Partnership Project; Technical Specification Group GSM/EDGE Radio Access Network; Cellular System Support for Ultra Low Complexity and Low Throughput Internet of Things; (Release 13)", 3GPP STANDARD; 3GPP TR 45.820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20150821), vol. GERAN WG1, no. V2.1.0, pages 1 - 524, XP050995869, discloses the tone-phase-shift-keying modulation scheme that uses both tone and signal phase to carry information.

US 4,416,016 describes a differential phase shift keyed receiver.

US 2007/0230610 A1 describes an apparatus for performing alternating quadratures differential binary phase shift keying modulation and demodulation.

US 5,313,493 describes a plural-differential phase-shift-keyed modulation and communication system.

The document QUALCOMM INCORPORATED, "Peak-to-Average Power Ratio and Power Spectral Density of Tone-Phase-Shift Keying", vol. TSG GERAN, no. Shanghai, China; 20150309 - 20150313, (20150308), 3GPP DRAFT; GP-150116- NB-OFDMA PAPR AND PSD OF TPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/GERAN/Docs/, (20150308), XP050931566, discloses a peak-to-average power ratio and power spectral density of tone-phase-shift keying.

**SUMMARY OF THE INVENTION**

The objective of the present invention is to provide an modulator, a demodulator, a battery-operated device as well as methods for modulating and/or demodulating a signal, wherein one or more of the problems of the prior art are overcome.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

A first aspect of the invention provides a modulator for generating a modulated signal with a reduced transmit spectrum, comprising

- a tone-phase shift keying unit configured to generate a TPSK-modulated signal, and
- a phase shifter configured to apply a predetermined phase shift to the TPSK-modulated signal output by the tone-phase shift keying unit to obtain a phase-shifted TPSK-modulated signal with reduced phase jumps, wherein the reduced phase jumps are reduced compared to the phase jumps of the TPSK-modulated signal output by the tone-phase shift keying unit.

According to the first aspect, the signal can be modified such that the signal has constant amplitude for practical transmitters whilst limiting the out of band spectral leakage. User orthogonality at the base-station receiver can also be maintained.

In particular, the reduced transmit spectrum can comprise a reduced out-of-band transmit spectrum, for example, a reduced spectrum outside a predefined frequency band.

In other words, in embodiments of the invention, the transmit spectrum is reduced in the sense that transmissions outside a predefined frequency band are minimized. At the same time, transmissions within the frequency band can be maximized. This means all energy transmitted is useful and also does not interfere with other users or cause regulatory problems.

In-band transmissions can also be referred to as transmission bandwidth.

In particular, the modulator of the first aspect can be used with efficient saturated power amplifiers.

The modulator can generate the modulated signal e.g. based on an unmodulated input signal. For example, the input to the modulator can be a digital sequence that should be modulated for transmission on a wireless communication system.

The reduced phase jumps are reduced compared to the phase jumps of the TPSK-modulated signal that is output by the tone-phase shift keying unit. This results in a reduced out of band transmit spectrum that is reduced compared to the transmit spectrum of the TPSK-modulated signal that is output by the tone-phase shift keying unit when used with a saturated power amplifier.

The phase shift can be predetermined in the sense that it can be determined independent of a current TPSK-modulated signal. In other words, it can be predetermined which phase shift is applied to an n-the symbol of a TPSK-modulated signal, before the n-the symbol is processed and/or modulated.

The inventors realized that the problem of spectral leakage occurs due to the phase discontinuity at the boundary of symbols. This can happen for two reasons:

Firstly, there is a difference in the phase encoding between successive symbols. In conventional single carrier systems, a pulse shaping filter smooth's transitions between symbols, however, for TPSK, there is no phase smoothing. Therefore, the phase encoding creates an instantaneous phase jump between symbols.

Secondly, the tone encoding results in the selection of different frequency tones between symbols. In the absence of a cyclic prefix, the tone start and end phase is always at zero (circulant due to the use of an IFFT in the encoding process), however, the cyclic prefix results in a non-circulant start and end phase when examined over the entire symbol.

In a first implementation of the modulator according to the first aspect, the phase shifter is configured to minimize a maximum phase jump. For example, if the maximum phase jump between consecutive symbols is $\pi/2$, the phase shifter can be configured to reduce this maximum phase jump as much as possible, e.g. to $\pi/4$.

According to some measure, this can lead to the best reduction of phase jumps and thus, by some spectrum usage measure, to the strongest reduction of spectrum usage.

In a second implementation of the modulator according to the first aspect, the modulator is configured to determine the predetermined phase shift $\Delta\varphi_p$ by evaluating all possible combinations of a final phase of a p-th symbol and a start phase of a $p+1$ symbol and setting the predetermined phase shift $\Delta\varphi_p$ to half of a maximum phase jump. In other words, the maximum phase jump is determined by evaluating all possible sequences of symbols. Then, the phase shift that shall be applied to every second symbol is set to half the maximum phase jump.

The modulator of the third implementation represents a practical method of determining the optimal phase shift. In practice, the predetermined phase shift $\Delta\varphi_p$ can be determined by executing instructions that correspond to the following pseudo code:

```
θ_min = π
θ_max_φ = 0
for Δφ = 0:φ_step: π
    for m2 = 0 to M-1
        for m1 = 0 to M-1
            for k = 0 to K-1
                θ = (m1 - m2)/M + k*N_CP/N + Δφ
                θ = mod(θ, 1)
                if |θ|>|θ_max_φ|
                    θ_max_φ = θ
            end

        end
    end
    if θ_max_φ < θ_min
        Δφ_p = Δφ
    end
end
```

In a third implementation of the modulator according to the first aspect, the phase shifter is configured to apply a phase shift between $\pi/4$ and $\pi/2$ to every second symbol of the TPSK-modulated signal and/or the phase-domain filtered signal.

The modulator of the fourth implementation represents a particularly simple and efficient phase shifting scheme. In particular, the phase shift can be chosen to be $\pi/4$ or $\pi/2$.

In a fourth implementation of the modulator according to the first aspect, the phase shifter is configured to minimize an average phase jump.

This results in a different reduction of the phase jumps and thus to a different kind of reduction of the transmit spectrum that may be preferable in some cases.

In a fifth implementation of the modulator according to the first aspect, the tone-phase shift keying unit is configured to use *K* tone frequencies, wherein the *K* frequencies correspond to K contiguous sub-carriers of an OFDM signal.

This has the advantage that, by using contiguous carriers, the devices with the largest frequency offset will still cause power leakage, but only near the contiguous block (closest carriers affected most). If these were interleaved, the power would leak over the entire sub-carrier range.

For multiuser uplink, different transmitters can use different sub-carriers. Despite good frequency correction, each of these users will have a slightly different frequency offset. In these cases, the sub-carriers have the effect of leaking into one another and the leakage power is proportional to the distance from the occupied sub-carrier.

In a sixth implementation of the modulator according to the first aspect, the modulator further comprises a phase shift notifier configured to transmit an information about the predetermined phase shift to a demodulator.

The information about the phase shift can e.g. comprise the amount of phase shift that is to be applied to every second symbol.

This has the advantage that even if the modulator changes the predetermined phase shift, the demodulator can still demodulate the signal.

The demodulator must know which phase shift is applied to the modulated signal before the demodulator can correctly undo the phase shift and demodulate the signal.

In a first embodiment, the demodulator assumes that there is only one kind of phase shift and this is hard-coded into both the modulator and the demodulator. Thus, there is no need to communicate information about the phase shift between modulator and demodulator.

If there are several modulation schemes (e.g. using different numbers of sub-carriers), the demodulator can use a look-up table to determine which kind of phase shift to use for a certain modulation scheme.

In a second embodiment, the demodulator can be configured to receive the information about the applied phase shift through a separate connection. For example, the demodulator receives the modulated signal through a first connection and receives the information about the applied phase shift through a second connection. Preferably, both first and second connection can be realized over the same physical communication path, e.g. a wireless communication path.

In a third embodiment, described below, the demodulator can receive the information about the applied phase shift through the same connection through that it receives the modulated signal.

In a seventh implementation of the modulator according to the first aspect, the modulator further comprises a phase domain filter configured to filter the TPSK-modulated signal in a phase domain to obtain a phase-domain filtered signal.

This has the advantage that phase jumps can be eliminated because the phase domain filter can remove the phase discontinuity remaining after the phase shift.

In a preferred embodiment, the phase domain filter is a low pass filter. In particular, it can have a flat pass band. For these reasons, a Gaussian filter could be used. However, there may be other choices of the filter in accordance with the invention.

In a particular embodiment, the phase domain filter can be configured to apply a Gaussian filter. For example, the Gaussian filter can be described as

$$g(t) = h^*(t) \cdot \mathrm{rect}(\mathrm{N}\Delta\mathrm{f}\, t)$$

where $\Delta$f is the subcarrier spacing, N the FFT size and the function rect(x) is defined by:

$$\mathrm{rect}(\mathrm{N}\Delta\mathrm{f}\, t) = \begin{cases} 1/\mathrm{N}\Delta\mathrm{f} & \text{for } |t| < \frac{1}{2\mathrm{N}\Delta\mathrm{f}} \\ 0 & \text{otherwise} \end{cases}$$

and * means convolution. $h(t)$ is defined by:

$$h(t) = \frac{\exp\left(\frac{-t^2}{2\delta^2(\mathrm{N}\Delta\mathrm{f})^2}\right)}{\sqrt{2\pi} \cdot \delta(N\Delta\mathrm{f})}$$

where $\delta = \sqrt{\ln(2)}/(2\pi BT)$ and $BT$=0.3, wherein $BT$ is the time bandwidth product.

A second aspect of the invention refers to a battery-operated device, in particular for networked operation, wherein the battery-operated device comprises a modulator according to one of the previous claims.

Reducing the transmission spectrum is of particular importance for devices with extremely low power consumption, such as so-called "Internet of things" devices. These devices may have a battery life of several months or even several years. Since the present invention leads to a reduced power requirement, the invention is of particular relevance for such "Internet of Things"-devices or generally networked devices with a requirement of particularly low power consumption.

A third aspect of the invention refers to a demodulator configured to demodulate a modulated signal that has been modulated using a modulator according to the first aspect or one of the implementations of the first aspect.

For example, the demodulator can comprise a phase-shifter and a tone-phase shift keying unit.

The phase shifter of the demodulator can be configured to undo the phase shift that has been applied by the modulator. For example, if the modulator is configured to apply a phase shift of $\pi/2$ to every second symbol, the demodulator can be configured to apply a phase shift of $-\pi/2$ to every second received symbol. In the following, this is referred to as undoing the phase shift.

The tone-phase shift keying unit of the demodulator can be configured to unmodulate the received modulated signal after undoing the phase shift as described above.

A fourth aspect of the invention refers to a method for modulating a signal, comprising the steps

- applying a tone-phase shift keying modulation to obtain a TPSK-modulated signal, and

- applying a predetermined phase shift to the TPSK-modulated signal output by the tone-phase shift keying unit to obtain a phase-shifted TPSK-modulated signal with reduced phase jumps, wherein the reduced phase jumps are reduced compared to the phase jumps of the TPSK-modulated signal output by the tone-phase shift keying unit.

In a first implementation of the method of the fourth aspect, the method further comprises a step of applying a phase domain filter to the TPSK-modulated signal to obtain a phase-domain filtered signal.

In a second implementation of the method of the fourth aspect, the method further comprises an initial step of transmitting an information about the predetermined phase shift to a demodulator.

Thus, a demodulator can receive modulated signals from modulators with different configurations. The modulator can use different predetermined phase shifts and the demodulator is still capable of demodulating them.

The methods according to the fourth aspect of the invention can be performed by the modulator according to the first aspect of the invention. Further features or implementations of the method according to the fourth aspect of the invention can perform the functionality of the modulator according to the first aspect of the invention and its different implementation forms.

A fifth aspect of the invention relates to a method for demodulating a signal, wherein the signal has been modulated using the method of the fourth aspect or one of the implementations of the fourth aspect.

The methods according to the fifth aspect of the invention can be performed by the demodulator according to the third aspect of the invention. Further features or implementations of the method according to the fifth aspect of the invention can perform the functionality of the demodulator according to the third aspect of the invention and its different implementation forms.

A sixth aspect of the invention refers to a computer-readable storage medium storing program code, the program code comprising instructions for carrying out the method of the fourth or fifth aspect or one of the implementations of the fourth or fifth aspect.

BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.

FIG. 1       is a block diagram illustrating a modulator according to an embodiment of the present invention,

FIG. 2       is a block diagram illustrating a system comprising a modulator and a demodulator in accordance with the present invention,

FIG. 3       is a block diagram illustrating a battery-operated device in accordance with an embodiment of the present invention,

FIG. 4A      is a flow chart of a method for modulating a signal in accordance with an embodiment of the present invention,

FIG. 4B      is a flow chart of a method for modulating a signal in accordance with a further embodiment of the present invention,

FIG. 5       shows the power spectral density for original TPSK and for a signal that has been phase-shifted and filtered in accordance with the invention, and

FTG. 6       is a diagram illustrating the output of the FFT at a receiver.

Detailed Description of the Embodiments

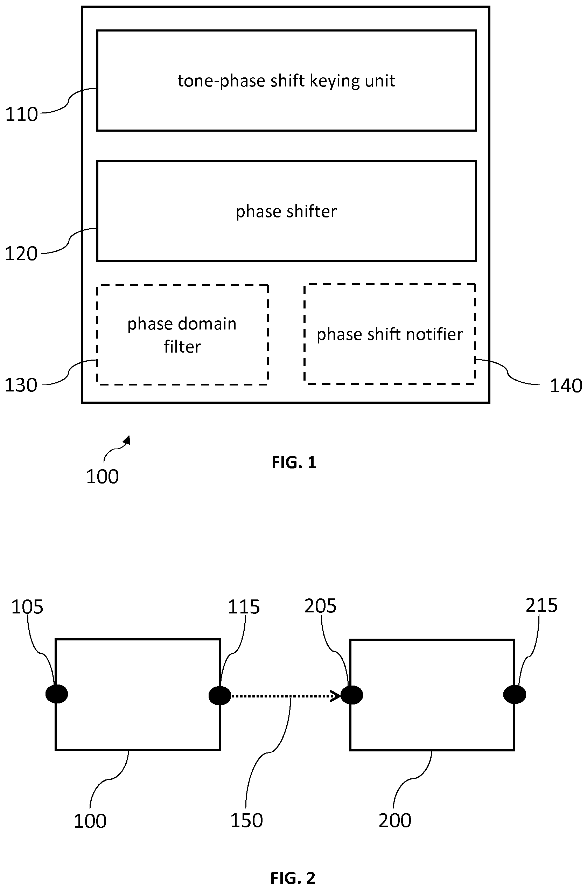

FIG. 1 is a block diagram illustrating a modulator 100 according to an embodiment of the present invention. The modulator 100 comprises a tone-phase shift keying unit 110 and a phase shifter 120. As indicated with dashed lines in FIG. 1, the modulator 100 may optionally further comprise a phase domain filter 130 and a phase shift notifier 140.

FIG. 2 is a block diagram illustrating a system comprising a modulator 100 and a demodulator 200. The modulator 100 comprises an input 105 for receiving an unmodulated signal. The modulator 100 generates a modulated signal 150 that is transmitted via output 115 to a demodulator 200.

The demodulator 200 receives the modulated signal 150 at input 205, demodulates the modulated signal 150 and outputs the demodulated signal via an output 215. In embodiments of the invention, the demodulated signal at the output 215 corresponds to the unmodulated signal that is received at the input 105 of the modulator 100.

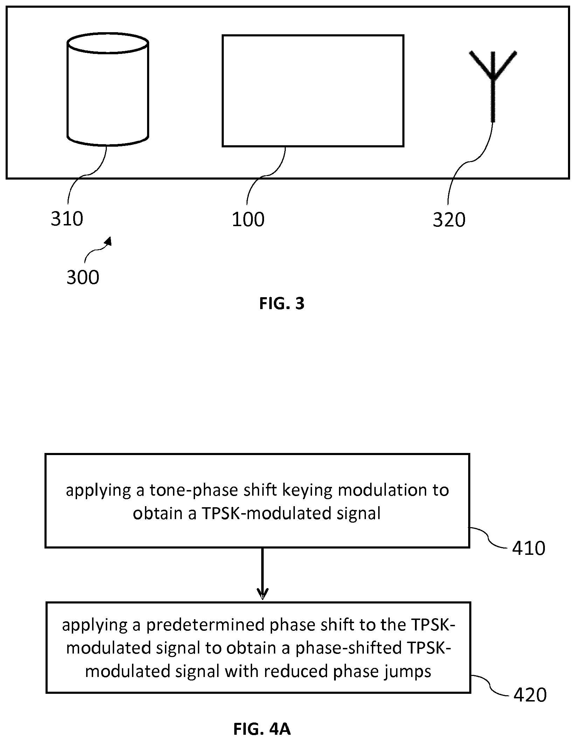

FIG. 3 is a block diagram illustrating a battery-operated device 300 in accordance with an embodiment of the present invention. The battery-operated device comprises a battery 310, a modulator 100 and a transmitter 320. The transmitter 320 may comprise an antenna configured for communication with a wireless communication system.

The battery-operated device 300 may be an "Internet of Things-device" with an extremely low power consumption, e.g. configured to operate for more than a month or even more than a year before requiring a replacement or recharging of the battery.

FIG. 4A is a flow chart of a method for modulating a signal in accordance with an embodiment of the present invention.

The method comprises a first step 410 of applying a tone-phase shift keying modulation to obtain a TPSK-modulated signal. In a second step 420, a predetermined phase shift is applied to the TPSK-modulated signal to obtain a phase-shifted TPSK-modulated signal with reduced phase jumps.

In a first example of a specific phase shifting scheme, for (M,K)-TPSK with a cyclic prefix length $N_{CP}$, the final phase for the p$^{th}$ symbol can be written as

$$\theta_p = \exp\left( j\frac{2\pi m_p}{M} \right)$$

This is because the tone frequencies contain an integer number of cycles. The start phase of the (p+1)$^{th}$ symbol can be written as

$$\theta'_{p+1} = \exp\left( j\frac{2\pi m_{p+1}}{M} \right) \exp\left( -j\frac{2\pi k_{p+1} N_{CP}}{N} \right)$$

$\theta_p$ is the end phase of the symbol, which the cyclic prefix is generated from. Therefore, the end phase is independent of cyclic prefix length and the start phase is dependent on the length of the cyclic prefix.

The phase shift $\Delta\varphi_p$ is applied to minimize the maximum possible angular difference between $\theta_p$ and $\theta'_{p+1}$. This phase change is defined as an incremental phase change to avoid the need to express in terms of previous values.

$\Delta\varphi_p$ is calculated by evaluating all the possible M and K combinations and finding the maximum difference. This is then reduced by applying the phase offset.

For example, consider the M = 2, K = 2 case. In this case, $m_p$ can take one of two possible (0, 1) values and $k_{p+1}$ can also take one of two values (0 and 1 is this example). The possible phase changes are

| (m, k) | $\Delta$ |
|--------|----------|
| (0, 0) | 0 |
| (1, 0) | $\pi$ |
| (0, 1) | $-\dfrac{2\pi N_{CP}}{N}$ |
| (1, 1) | $\pi - \dfrac{2\pi N_{CP}}{N}$ |

In this case, the maximum phase change occurs when we changed the information bit on the same tone. In this case, the phase change is $\pi$. The phase shift for this modulation type is therefore $\pi/2$, which reduces the possible phase shift (assuming $N_{CP}$ is close to zero for this example).

In a second example, a larger prefix $N_{CP}$ on the order of 32 samples with an FFT size of 128 is used. In other words, 1/4 can be used for the cyclic prefix. In this case, the changes from one symbol to the next can be on the order of $\pi$. Using a phase rotation of $\pi/2$ is then appropriate. For the example above, the phase start points are 0, $\pi$, -$\pi/2$ and $\pi/4$. In this case, using the pseudo code provided above, $\Theta_{max} = \pi$ and $\Theta_{max\_next} = \pi/2$. This results in a $\Delta\Phi$ equal to $\pi/4$. Thus, the resulting maximum phase shift is $\dfrac{3}{4}\pi$, which is higher than for the case of small cyclic prefix, but still less than the original.

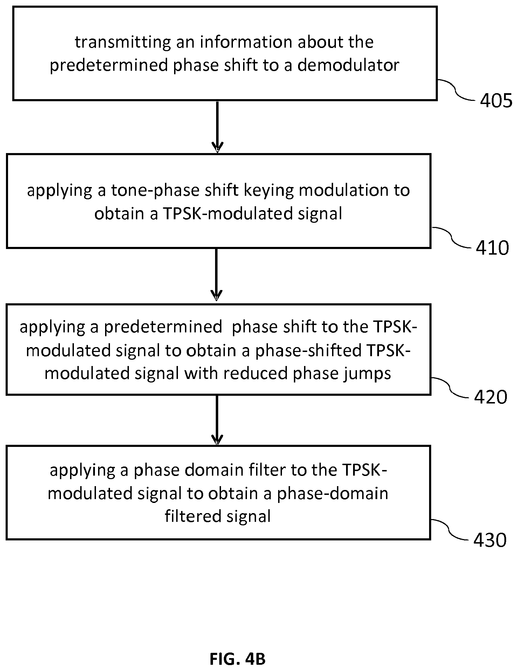

FIG. 4B is a flow chart of a method for modulating a signal in accordance with a further embodiment of the present invention. Compared to the method shown in FIG. 4A, the method further comprises an initial step 405 of transmitting an information about the predetermined phase shift to a demodulator and a last step 430 of applying a phase domain filter to the TPSK-modulated signal to obtain a phase-domain filtered signal.

The initial step 405 allows the demodulator to receive information about the phase shift and thus, to undo the applied phase shift. In this way, a demodulator can receive differently modulated signals and still appropriately undo the phase shift.

To this end, modulator and/or demodulator can be configured to first transmit a modulated signal without applied phase shift, wherein the modulated signal encodes information about a phase shift. Subsequently, the modulator applies the phase shift and the demodulator uses the information about the phase shift to undo the applied phase shift and correctly demodulated the signal. This has the advantage that the modulator can use different phase shifts and the demodulator is still capable of demodulating the modulating signals - without requiring a separate connection to the demodulator.

Thus, a method for communicating a signal from modulator to demodulator can comprise the steps:

- the modulator transmitting a predetermined number of symbols, wherein the symbols encode an information about a phase shift,
- the demodulator receiving the predetermined number of symbols,
- the demodulator decoding the predetermined number of symbols to obtain the information about the phase shift,
- the modulator applying the predetermined phase shift to an input signal and transmitting the modulated signal,
- the demodulator receiving the modulated signal,
- the demodulator demodulating the received modulated signal using the information about the phase shift (e.g. first undoing the phase shift, then applying a TPSK-demodulation).

The last step 430 makes it possible that the reduced phase jumps are smoothed and/or reduced further. Thus, the transmit spectrum can be reduced even further.

A phase domain filter can be applied to remove the discontinuity. This filter is applied in the phase domain and at the symbol boundaries, resulting in a smooth transition between symbols. Because the filter is of a non-zero length, the length of the cyclic prefix has to be increased in order to maintain orthogonality. However, there is a tradeoff between the length of the filter which is a measure of how limited the spectrum is and the additional cyclic prefix length which maintains orthogonality between users. This allows the system to be tuned to the required level.

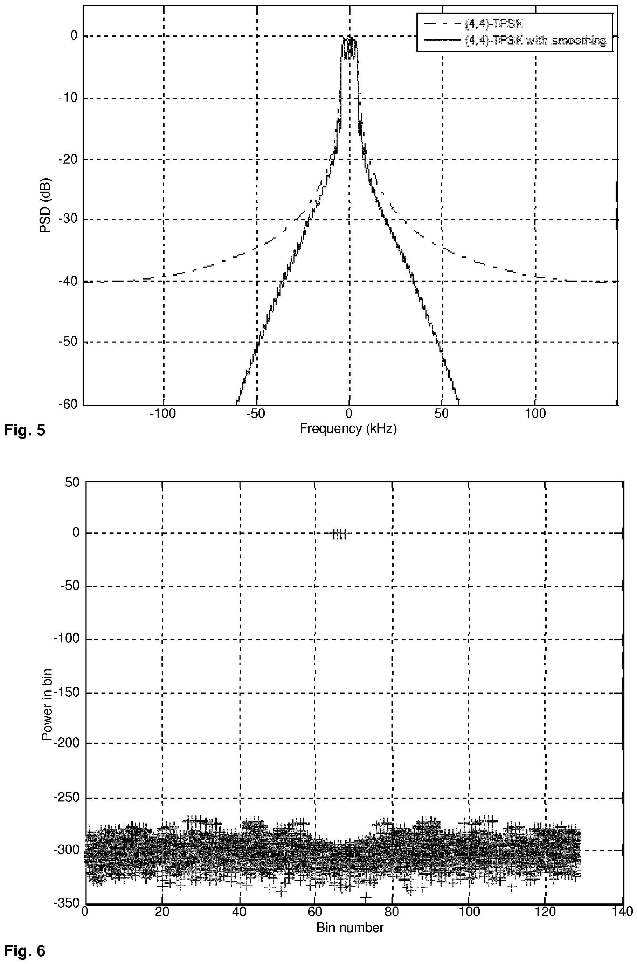

FIG. 5 shows the power spectral density for original TPSK and for a phase-shifted and filtered signal as described above.

The orthogonality between users is maintained, and the inter carrier interference is effectively zero. This is demonstrated with the results shown in FIG. 6, where the output of the FFT processing at the receiver is shown. The four central FFT bins (OFDMA sub-carriers) contain a TPSK signal (for example (4,4)-TPSK). The leakage into the unoccupied FFT bins is of the order of -300 dB, which demonstrates that orthogonality is maintained for all practical purposes. Thus, FIG. 6 demonstrates the negligible amounts of spectral leakage over adjacent sub-carriers.

Both the phase shifting and the filtering in the phase domain can result in a reduced transmission bandwidth and thus in an improved performance. Using the phase shifting technique to minimize the maximum phase jump between symbols leads to a reduced length phase smoothing filter which in turn allows a shorter cyclic prefix. This improves the spectral efficiency of the system.

The phase shift between consecutive symbols is a function of the current modulation type and also the length of the cyclic prefix. The phase shift is different for each possible tone location, however, this is known at the receiver and can easily be removed.

To summarize, the present invention allows limiting the phase discontinuity at the symbol boundary and therefore results in a band limited spectrum. Preferred embodiments of the invention allow

- the spectrum to be limited, so that a realistic hardware implementation can transmit the spectrum while meeting spectral masks,
- the constant amplitude of the signal to be maintained, which allows for higher efficiency power amplifiers, and
- user orthogonality to be maintained.

The foregoing descriptions are only implementation manners of the present invention. The protection scope of the present invention should be subject to the protection scope of the attached claims.

**Claims**

1. Modulator (100) for generating a modulated signal with a reduced transmit spectrum, comprising

   - a tone-phase shift keying, TPSK, unit (110) configured to generate a TPSK-modulated signal,

- a phase shifter (120) configured to apply a predetermined phase shift to the TPSK-modulated signal output by the tone-phase shift keying unit to obtain a phase-shifted TPSK-modulated signal (150) with reduced phase jumps, wherein the reduced phase jumps are reduced compared to the phase jumps of the TPSK-modulated signal output of the tone-phase shift keying unit;

wherein the phase shifter (120) is configured to minimize a maximum phase jump of the TPSK-modulated signal; **characterised in that** the modulator is configured to determine the predetermined phase shift $\Delta\varphi_p$ by evaluating all possible combinations of a final phase of a p-th symbol and a start phase of a $p$+1 symbol and setting the predetermined phase shift $\Delta\varphi_p$ to half of a maximum phase jump; and
wherein the phase shifter (120) is configured to apply a phase shift between $\pi/4$ and $\pi/2$ to every second symbol of the TPSK-modulated signal (150).

2. The modulator (100) of claim 1, wherein the tone-phase shift keying unit (110) is configured to use a tone of $K$ frequencies, wherein the K frequencies correspond to $K$ contiguous sub-carriers of an OFDM signal.

3. The modulator (100) of one of the previous claims, further comprising a phase shift notifier (140) configured to transmit an information about the predetermined phase shift to a demodulator.

4. The modulator of one of the previous claims, further comprising a phase domain filter configured to filter the TPSK-modulated signal (150) in a phase domain to obtain a phase-domain filtered signal (150).

5. Battery-operated device, in particular for networked operation, comprising a modulator according to one of the previous claims.

6. Demodulator configured to demodulate a modulated signal (150) that has been modulated using a modulator according to one of claims 1 to 5.

7. Method for modulating a signal, comprising the steps

- applying (410) a tone-phase shift keying, TPSK, modulation to obtain a TPSK-modulated signal,
- applying (420) a predetermined phase shift to the TPSK-modulated signal output of the tone-phase shift keying unit to obtain a phase-shifted TPSK-modulated signal (150) with reduced phase jumps, wherein the reduced phase jumps are reduced compared to the phase jumps of the TPSK-modulated signal output of the tone-phase shift keying unit;

wherein the method further comprises

- minimizing a maximum phase jump of the TPSK-modulated signal;
- wherein the method is **characterised by** determining the predetermined phase shift $\Delta\varphi_p$ by evaluating all possible combinations of a final phase of a p-th symbol and a start phase of a p+1 symbol and setting the predetermined phase shift $\Delta\varphi_p$ to half of a maximum phase jump; and
- applying a phase shift between $\pi/4$ and $\pi/2$ to every second symbol of the TPSK-modulated signal (150).

8. The method of claim 7, further comprising a step of applying (430) a phase domain filter to the TPSK-modulated signal to obtain a phase-domain filtered signal.

9. The method of claim 7 or 8, further comprising an initial step of transmitting (405) an information about the predetermined phase shift to a demodulator.

10. Method for demodulating a signal, wherein the signal has been modulated using the method of one of claims 7 to 9.

11. Computer-program comprising instructions for carrying out the method of one of claims 7 to 10.

**Patentansprüche**

1. Modulator (100) zum Erzeugen eines modulierten Signals mit einem reduzierten Übertragungsspektrum, Folgendes umfassend

- eine Tonphasenverschiebungstasten-(TPSK)Einheit (110), die konfiguriert ist, um ein TPSK-moduliertes Signal zu erzeugen,
- einen Phasenverschieber (120), der konfiguriert ist, um eine zuvor bestimmte Phasenverschiebung auf das TPSK-modulierte Signal anzuwenden, das von der Tonphasenverschiebungstasten-Einheit ausgegeben wird, um ein phasenverschobenes TPSK-moduliertes Signal (150) mit reduzierten Phasensprüngen zu erhalten, wobei die reduzierten Phasensprünge im Vergleich zu den Phasensprüngen des TPSK-modulierten Signalausgangs der Tonphasenverschiebungstasten-Einheit reduziert sind;

wobei der Phasenverschieber (120) konfiguriert ist, um einen maximalen Phasensprung des TPSK-modulierten Signals zu minimieren;
**dadurch gekennzeichnet, dass** der Modulator konfiguriert ist, um die zuvor bestimmte Phasenverschiebung $\Delta\varphi_p$ durch Auswerten der gesamten möglichen Kombinationen einer Endphase eines $p$-th-Symbols und einer Startphase eines $p$+1-Symbols und Einstellen der zuvor bestimmten Phasenverschiebung $\Delta\varphi_p$ auf die Hälfte eines maximalen Phasensprungs zu bestimmen; und
wobei der Phasenverschieber (120) konfiguriert ist, um eine Phasenverschiebung zwischen $\pi/4$ und $\pi/2$ auf jedes zweite Symbol des TPSK-modulierten Signals (150) anzuwenden.

2. Modulator (100) nach Anspruch 1, wobei die Tonphasenverschiebungstasten-Einheit (110) konfiguriert ist, um einen Ton von $K$-Frequenzen zu verwenden, wobei die $K$-Frequenzen $K$- zusammenhängenden Unterträgern eines OFDM-Signals entsprechen.

3. Modulator (100) nach einem der vorhergehenden Ansprüche, ferner umfassend einen Phasenverschiebungsbenachrichtiger (140), der konfiguriert ist, um eine Information über die zuvor bestimmte Phasenverschiebung an einen Demodulator zu übertragen.

4. Modulator nach einem der vorhergehenden Ansprüche, ferner umfassend einen Phasendomänenfilter, der konfiguriert ist, um das TPSK-modulierte Signal (150) in einer Phasendomäne zu filtern, um ein Phasendomänen-gefiltertes Signal (150) zu erhalten.

5. Batteriebetriebene Vorrichtung, insbesondere für den Netzwerkbetrieb, umfassend einen Modulator nach einem der vorhergehenden Ansprüche.

6. Demodulator, der konfiguriert ist, um ein moduliertes Signal (150) zu demodulieren, das unter Verwendung eines Modulators nach einem der Ansprüche 1 bis 5 moduliert wurde.

7. Verfahren zum Modulieren eines Signals, umfassend die folgenden Schritte

- Anwenden (410) einer Tonphasenverschiebungstasten-(TPSK)Modulation, um ein TPSK-moduliertes Signal zu erhalten,
- Anwenden (420) einer zuvor bestimmten Phasenverschiebung auf den TPSK-modulierten Signalausgang der Tonphasenverschiebungstasten-Einheit, um ein phasenverschobenes TPSK-moduliertes Signal (150) mit reduzierten Phasensprüngen zu erhalten, wobei die reduzierten Phasensprünge im Vergleich zu den Phasensprüngen des TPSK-modulierten Signalausgangs der Tonphasenverschiebungstasten-Einheit reduziert sind;

wobei das Verfahren ferner Folgendes umfasst

- Minimieren eines maximalen Phasensprungs des TPSK-modulierten Signals;
- wobei das Verfahren durch Folgendes gekennzeichnet ist Bestimmen der zuvor bestimmten Phasenverschiebung $\Delta\varphi_p$ durch Auswerten der gesamten möglichen Kombinationen einer Endphase eines $p$-th-Symbols und einer Startphase eines $p$+1-Symbols und Einstellen der zuvor bestimmten Phasenverschiebung $\Delta\varphi_p$ auf die Hälfte eines maximalen Phasensprungs; und
- Anwenden einer Phasenverschiebung zwischen $\pi/4$ und $\pi/2$ auf jedes zweite Symbol des TPSK-modulierten Signals (150).

8. Verfahren nach Anspruch 7, ferner umfassend einen Schritt des Anwendens (430) eines Phasendomänenfilters auf das TPSK-modulierte Signal, um ein Phasendomänen-gefiltertes Signal zu erhalten.

9. Verfahren nach Anspruch 7 oder 8, ferner umfassend einen Anfangsschritt des Übertragens (405) einer Information über die zuvor bestimmte Phasenverschiebung an einen Demodulator.

**10.** Verfahren zum Demodulieren eines Signals, wobei das Signal unter Verwendung des Verfahrens nach einem der Ansprüche 7 bis 9 moduliert wurde.

**11.** Computerprogramm, umfassend Anweisungen zum Durchführen des Verfahrens nach einem der Ansprüche 7 bis 10.

## Revendications

**1.** Modulateur (100) pour générer un signal modulé doté d'un spectre de transmission réduit, comprenant

- une unité de modulation par déplacement de phase de tonalité, TPSK, (110) configurée pour générer un signal modulé par TPSK,
- un déphaseur (120) configuré pour appliquer un déphasage prédéterminé à la sortie du signal modulé par TPSK à partir de l'unité de modulation par déplacement de phase de tonalité afin d'obtenir un signal modulé par TPSK déphasé (150) doté de sauts de phase réduits, dans lequel les sauts de phase réduits sont réduits par rapport aux sauts de phase de la sortie du signal modulé par TPSK de l'unité de modulation par déplacement de phase de tonalité ;

dans lequel le déphaseur (120) est configuré pour minimiser un saut de phase maximal du signal modulé par TPSK ; **caractérisé en ce que** le modulateur est configuré pour déterminer le déphasage prédéterminé $\Delta\varphi_p$ par l'évaluation de toutes les combinaisons possibles d'une phase finale d'un $p$-ième symbole et d'une phase de début d'un symbole p+1 et par le réglage du déphasage prédéterminé $\Delta\varphi_p$ à la moitié d'un saut de phase maximal ; et dans lequel le déphaseur (120) est configuré pour appliquer un déphasage entre $\pi/4$ et $\pi/2$ à chaque second symbole du signal modulé par TPSK (150).

**2.** Modulateur (100) selon la revendication 1, dans lequel l'unité de modulation par déplacement de phase de tonalité (110) est configurée pour utiliser une tonalité de $K$ fréquences, les K fréquences correspondant à $K$ sous-porteuses contiguës d'un signal OFDM.

**3.** Modulateur (100) selon l'une quelconque des revendications précédentes, comprenant en outre un notificateur de déphasage (140) configuré pour transmettre une information relative au déphasage prédéterminé à un démodulateur.

**4.** Modulateur selon l'une quelconque des revendications précédentes, comprenant en outre un filtre de domaine de phase configuré pour filtrer le signal modulé par TPSK (150) dans un domaine de phase afin d'obtenir un signal filtré par domaine de phase (150).

**5.** Dispositif à piles, en particulier pour le fonctionnement en réseau, comprenant un modulateur selon l'une quelconque des revendications précédentes.

**6.** Démodulateur configuré pour démoduler un signal modulé (150) qui a été modulé à l'aide d'un modulateur selon l'une quelconque des revendications 1 à 5.

**7.** Procédé de modulation d'un signal, comprenant les étapes suivantes :

- l'application (410) d'une modulation par déplacement de phase de tonalité, TPSK, afin d'obtenir un signal modulé par TPSK,
- l'application (420) d'un déphasage prédéterminé à la sortie du signal modulé par TPSK de l'unité de modulation par déplacement de phase de tonalité afin d'obtenir un signal modulé par TPSK déphasé (150) doté de sauts de phase réduits, dans lequel les sauts de phase réduits sont réduits par rapport aux sauts de phase de la sortie du signal modulé par TPSK de l'unité de modulation par déplacement de phase de tonalité ;

dans lequel le procédé comprend en outre :

- la minimisation d'un saut de phase maximal du signal modulé par TPSK ;
- dans lequel le procédé est **caractérisé par** :

la détermination du déphasage prédéterminé $\Delta\varphi_p$ par l'évaluation de toutes les combinaisons possibles d'une phase finale d'un p-ième symbole et d'une phase de début d'un symbole $p$+1 et par le réglage du déphasage prédéterminé $\Delta\varphi_p$ à la moitié d'un saut de phase maximal ; et
- l'application d'un déphasage entre $\pi/4$ et $\pi/2$ à chaque second symbole du signal modulé par TPSK (150).

8. Procédé selon la revendication 7, comprenant en outre une étape d'application (430) d'un filtre de domaine de phase au signal modulé par TPSK afin d'obtenir un signal filtré par domaine de phase.

9. Procédé selon la revendication 7 ou 8, comprenant en outre une étape initiale de transmission (405) d'une information relative au déphasage prédéterminé à un démodulateur.

10. Procédé de démodulation d'un signal, dans lequel le signal a été modulé à l'aide du procédé selon l'une quelconque des revendications 7 à 9.

11. Programme d'ordinateur comprenant des instructions destinées à la réalisation du procédé selon l'une quelconque des revendications 7 à 10.

tone-phase shift keying unit

110

phase shifter

120

phase domain
filter

130

phase shift notifier

140

100

**FIG. 1**

105        115        205        215

100        150        200

**FIG. 2**

310            100            320

300

**FIG. 3**

applying a tone-phase shift keying modulation to obtain a TPSK-modulated signal

410

applying a predetermined phase shift to the TPSK-modulated signal to obtain a phase-shifted TPSK-modulated signal with reduced phase jumps

420

**FIG. 4A**

transmitting an information about the predetermined phase shift to a demodulator

405

applying a tone-phase shift keying modulation to obtain a TPSK-modulated signal

410

applying a predetermined phase shift to the TPSK-modulated signal to obtain a phase-shifted TPSK-modulated signal with reduced phase jumps

420

applying a phase domain filter to the TPSK-modulated signal to obtain a phase-domain filtered signal

430

**FIG. 4B**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4416016 A
- US 20070230610 A1
- US 5313493 A

### Non-patent literature cited in the description

- 3rd Generation Partnership Project; Technical Specification Group GSM/EDGE Radio Access Network; Cellular System Support for Ultra Low Complexity and Low Throughput Internet of Things; (Release 13). 3GPP STANDARD; 3GPP TR 45.820, 3RD GENERATION PARTNERSHIP PROJECT (3GPP). MOBILE COMPETENCE CENTRE, 21 August 2015, 1-524

- Peak-to-Average Power Ratio and Power Spectral Density of Tone-Phase-Shift Keying. **QUALCOMM INCORPORATED.** 3GPP DRAFT; GP-150116-NB-OFDMA PAPR AND PSD OF TPSK, 3RD GENERATION PARTNERSHIP PROJECT (3GPP). MOBILE COMPETENCE CENTRE, 09 March 2015